# EUROPEAN PATENT APPLICATION

(11) **EP 4 667 445 A1**
(43) Date of publication of application: **24.12.2025**
(21) Application number: 25182018.9
(22) Date of filing: 11.06.2025
(51) Int. Cl.: C04B 41/00, C04B 41/45, C04B 41/52, C04B 41/89

(54) **BONDCOAT FOR A COATED COMPONENT AND METHODS OF FORMATION**

(30) Priority: 21.06.2024 US 202418749796
(71) Applicant: General Electric Company, Cincinnati, Ohio 45215 (US)
(72) Inventor: WAN, Julin, Niskayuna, 12309-1027 (US); VOZAR, Andrea, Niskayuna, 12309-1027 (US)
(74) Representative: Openshaw & Co.

(57) **Abstract**

A coated component (10), along with method of its formation, is provided. The coated component (10) includes a substrate (12) having a surface (14); a bondcoat (16) on the surface (14) of the substrate (12); and an environmental barrier coating (18) on the bondcoat (16). The bondcoat (16) comprises a silicon-based phase (20) and a secondary phase (22), with the secondary phase (22) comprising at least 60% of a high temperature material. The silicon-based phase (20) spans a first region of the bondcoat (16) from the surface (14) of the substrate (12) to the environmental barrier coating (18), and the mullite secondary phase (22) spans a second region of the bondcoat (16) from the surface (14) of the substrate (12) to the environmental barrier coating (18).

## Description

### FIELD

The present disclosure generally relates to bondcoats for coated components, along with methods of their formation.

### BACKGROUND

Silicon-based materials are employed for high temperature components of gas turbine engines such as, for instance, airfoils (e.g., blades, vanes), combustor liners, and shrouds. The silicon-based materials may include silicon-based monolithic ceramic materials, intermetallic materials, and composites. For example, silicon-based ceramic matrix composites (CMCs) may include silicon-containing fibers reinforcing a silicon-containing matrix phase.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional schematic view of an exemplary coated component including a substrate coated with a multi-phase bondcoat and a barrier coating;
FIG. 2 is a cross-sectional schematic view of another exemplary coated component including a substrate coated with a multi-phase bondcoat and a barrier coating; and
FIG. 3 is a flow chart diagram of an exemplary method of forming a coated component described herein.

Repeat use of reference characters in the present specification and drawings is intended to represent the same or analogous features or elements of the present disclosure.

### DEFINITIONS

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

As used herein, the terms "first", "second", and "third" may be used interchangeably to distinguish one component from another and are not intended to signify location or importance of the individual components.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth. As used herein, "RE" refers to a rare earth element or a mixture of rare earth elements. More specifically, the " RE" refers to the rare earth elements of scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), or mixtures thereof.

As used herein, "silica" refers to a silicon oxide in the form of SiO₂. Conversely, "elemental silicon" refers to silicon without any alloying materials present, outside of incidental impurities. It is sometimes referred to in the art as "silicon metal." Elemental silicon has a melting point of about 1414 °C.

As used herein, "alumina" refers to an aluminum oxide in the form of Al₂O₃.

As used herein, the term "mullite" generally refers to a mineral containing alumina and silica. That is, mullite is a chemical compound of alumina and silica with an alumina (Al₂O₃) and silica (SiO₂) ratio of about 3 to 2 (e.g., within 10 mole % of 3 to 2 of alumina to silica). However, a ratio of about 2 to 1 has also been reported as mullite (e.g., within 10 mole % of 2 to 1 of alumina to silica).

As used herein, the term "substantially free" is understood to mean completely free of said constituent, or inclusive of trace amounts of same. "Trace amounts" are those quantitative levels of chemical constituent that are barely detectable and provide no benefit to the functional or aesthetic properties of the subject composition. The term "substantially free" also encompasses completely free.

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of" since the relative position above or below depends upon the orientation of the device to the viewer.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure. For instance, identical numerals indicate the same or similar elements throughout the figures,
Silicon carbide and silicon nitride ceramics undergo oxidation in dry, high temperature environments. This oxidation produces a passive, silicon oxide scale on the surface of the material. In moist, high temperature environments containing water vapor, such as a turbine engine, both oxidation and recession occurs due to the formation of a passive silicon oxide scale and subsequent conversion of the silicon oxide to gaseous silicon hydroxide. To prevent recession in moist, high temperature environments, environmental barrier coatings (EBC's) are deposited onto silicon carbide and silicon nitride materials.

Currently, EBC materials are made out of rare earth silicate compounds. These materials seal out water vapor, preventing it from reaching the silicon oxide scale on the silicon carbide or silicon nitride surface, thereby preventing recession. Such materials cannot prevent oxygen penetration, however, which results in oxidation of the underlying substrate. Oxidation of the substrate yields a passive silicon oxide scale, along with the release of carbonaceous or nitrous oxide gas. The carbonaceous (i.e., CO, CO2) or nitrous (i.e., NO, NO2, etc.) oxide gases cannot escape out through the dense EBC and thus, blisters form, which can cause spallation of the EBC. The use of a silicon bondcoat has been the solution to this blistering problem to date. The silicon bondcoat provides a layer that oxidizes (forming a passive silicon oxide layer beneath the EBC) without liberating a gaseous by-product.

The presence of a silicon bondcoat limits the upper temperature of operation for the EBC because the melting point of silicon metal is relatively low, at about 1414° C. Above these melting temperatures, the silicon bondcoat may delaminate from the underlying substrate, effectively removing the bondcoat and the EBC thereon. Recently, high temperature EBCs have been contemplated that utilize a bondcoat containing silicon particles as an oxygen getter.

However, these high temperature EBCs have shown a weakness in intermediate temperature ranges. In particular, it is desired that the bondcoat prevents both water and oxygen permeation to the underlying substrate at temperatures of 650° C to 1500° C. For prevention of water permeation, it is desired to minimize or remove any open porosity in the bondcoat. As such, it is desirable to have improved bondcoats in the EBC to achieve a higher operational temperature limit for the EBC while remaining effective in lower and intermediate temperatures.

The present disclosure generally relates to bondcoats for use with environmental barrier coatings, along with methods of their formation on a surface of a substrate. The bondcoats have a varying composition across the surface of the substrate such that the functionality of the bondcoat can be strategically designed so that it can function at specific thermochemical or thermomechanical conditions. For example, the bondcoat may be designed in such a manner to match the service conditions of various locations on the substrate.

That is, the presently described methods and resulting coated components may have an EBC system 15 that is developed to have different functionality temperatures at different locations on the surface of the substrate for tailored performance thereof across a wide temperature range. In particular, the presently disclosed methods and coated components may have a high temperature coating system to locations subjected to high operational temperatures while other locations where the operational temperature is relatively low receive a low temperature EBC system. Therefore, the EBC system 15 exerts tailored performance in the temperature range in which it is designed.

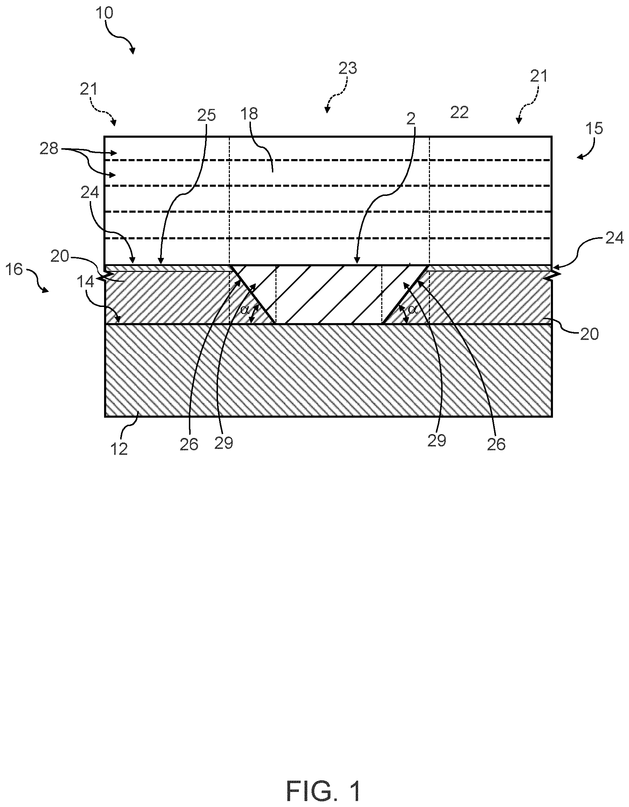

Referring to FIG. 1, an exemplary coated component 10 is shown including a substrate 12 having a surface 14 with an EBC system 15 thereon. In one particular embodiment, the substrate 12 is formed from a silicon-containing material, such as a ceramic matrix composite ("CMC") material. As used herein, ceramic-matrix-composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃ 2SiO₂), as well as glassy aluminosilicates.

In certain embodiments, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, such as a cure or burn-out to yield a high char residue in the preform, and subsequent chemical processing, such as melt-infiltration with silicon, to arrive at a component formed of a CMC material having a desired chemical composition.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer.

The EBC system 15 includes a bondcoat 16 on the surface 14 of the substrate 12, and an EBC 18 on the bondcoat 16. In the embodiment shown, the bondcoat 16 is directly on the surface 14 without any layer therebetween. Generally, the bondcoat 16 includes separate phases formed of different materials therein. For instance, a first phase can be formed from different materials as compared to an adjacent phase so as to have different thermal properties across the separate phases, resulting in corresponding portions of the EBC system 15 having different thermal properties.

The exemplary coated component 10 of FIG. 1 includes a bondcoat 16 having a silicon-based phase 20 and a secondary phase 22. Each of the silicon-based phase 20 and the secondary phase 22 spans their respective region of the bondcoat 16 from the surface 14 of the substrate 12 to the EBC 18. Thus, the silicon-based phase 20 defines a first region 21 of the bondcoat 16 that spans from the surface 14 of the substrate 12 to the EBC 18, the secondary phase 22 defines a second region 23 of the bondcoat 16 that spans from the surface 14 of the substrate 12 to the EBC 18 in at least one section of the second region 23. Generally, the secondary phase 22 includes a second composition that may serve as a high temperature material that is a material capable of withstanding gas turbine engine operating temperatures of about 1000° C to about 2000° C.

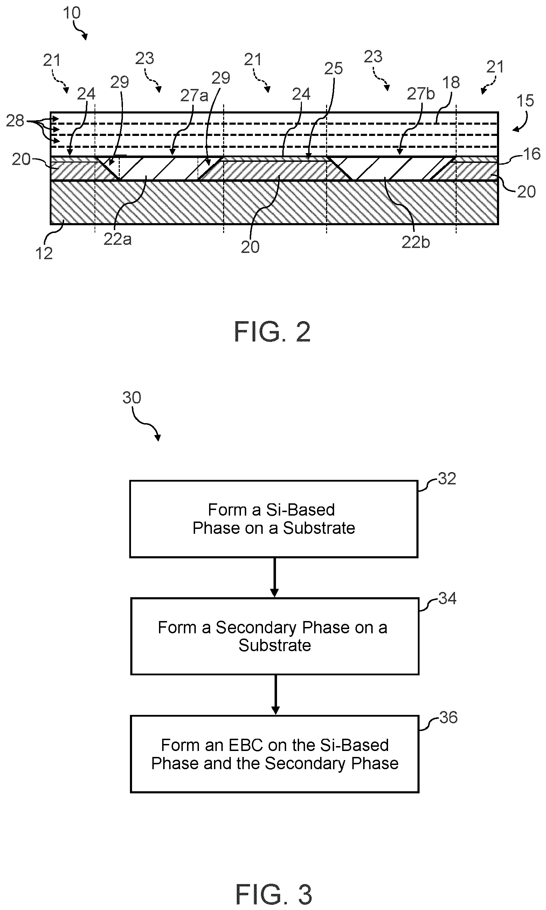

In embodiments, the bondcoat 16 may include a plurality of silicon-based phases 20 and a plurality of secondary phases (shown as at least a first secondary phase 22a and a second secondary phase 22b), such as shown in the exemplary coated component 10 of FIG. 2. Each secondary phase 22 of the plurality of secondary phase 22a, 22b may include the same chemical material (i.e., the same second composition) or a different chemical material. That is, the first secondary phase 22a may include a first second composition, and the second secondary phase 22b may include a second second composition, with the first second composition being different than the second second composition.

No matter the particular configuration such as shown in FIGS. 1 and 2, the silicon-based phase 20 comprises at least 50% by weight silicon (i.e., in the form of elemental silicon), and in particular embodiments, the silicon-based phase 20 is greater than 75% by weight silicon, such as comprises greater than 95% by weight silicon. In one embodiment, the silicon-based phase 20 consists essentially of silicon. Thus, the silicon-based phase 20 generally defines a first region 21 of the EBC system 15 that corresponds to a relatively low temperature region of the EBC system 15.

A thermally grown oxide (TGO) layer 24 is shown present on the silicon-based phase 20 between the silicon-based phase 20 and the EBC 18. The TGO layer 24 forms on the silicon-based phase 20 upon exposure of the silicon-based phase 20 to oxygen to form a thin layer of silica thereon (defining the TGO layer 24).

The secondary phase 22 comprises at least 60% by weight of a second composition, and in particular embodiments, the secondary phase 22 is greater than 75% by weight of the second composition, such as comprises greater than 95% by weight of the second composition. In one embodiment, the secondary phase 22 consists essentially of the second composition. Alternatively, the secondary phase 22 may have other materials present therein, such as silicon (e.g., elemental silicon), in an amount that is less than 40% by weight of the secondary phase 22. For example, the secondary phase 22 may include, in one embodiment, 0% to 40% by volume silicon (i.e., 0% to 33.6% by weight) and the second composition as the balance. In one particular embodiment, the secondary phase 22 may include the second composition and 2% to 40% by volume (i.e., 1.5% to 33.6% by weight) silicon. Thus, the secondary phase 22 generally defines a second region 23 of the EBC system 15 that corresponds to a relatively high temperature region of the EBC system 15.

In the embodiment shown, the secondary phase 22 has a smaller cross-section at the surface 14 of the substrate 12 and a larger cross-section at the surface 25 adjacent to the EBC 18. For example, an interface 26 between the silicon-based phase 20 and the secondary phase 22 may be at an acute angle α (e.g., 30° to 80°) to the surface 14 of the substrate 12 such that the secondary phase 22 has an increasing cross-sectional size moving away from the surface 14 of the substrate 12. In the embodiment shown, the secondary phase 22 has a trapezoidal cross-section. However, other cross-section shapes may be utilized in the secondary phase 22, including but not limited to, a stepped cross-section between the silicon-based phase 20 and the secondary phase 22, a curved cross-section between the silicon-based phase 20 and the secondary phase 22, geometrical interlocks between the silicon-based phase 20 and the secondary phase 22, a gradient transition between the silicon-based phase 20 and the secondary phase 22, etc.

In order to make such a secondary phase 22 that has an overlap region 29 that overlaps the silicon-based phase 20, the silicon-based phase 20 is deposited on the surface 14 prior to the secondary phase 22 being deposited. In one example, a full continuous layer of the silicon-based phase 20 is deposited on the surface 14, then partial removal of silicon-based phase 20 corresponding to the second region 23 may be performed, by way of machining, or laser ablation or masked grit blasting. Afterwards the secondary phase 22 can be deposited into the second region. In another example, either the secondary phase 22, the silicon-based phase 20, or both, may be deposited on to surface 14 by way of additive manufacturing. In yet another embodiment, the surface 14 of the substrate 12 may be masked in the areas corresponding to the second region(s) 23 prior to formation of the silicon-based phase 20. That is, prior to forming the silicon-based phase 20, a mask may be applied to a region on the surface 14 of the substrate 12 that corresponds to the second region 23. Then, after forming the silicon-based phase 20 and prior to forming the secondary phase 22, the mask is removed from the surface 14 of the substrate 12. Then, a second mask can be placed corresponding to the first region 21 on top of the silicon-based phase 20, and the secondary phase 22 may be deposited to complete the bondcoat 16. In order to utilize a mask to form an overlap region 29, then a repeated series of steps may be utilized with masking. For example, the series of steps may include masking the second region(s) 23, forming a layer of the silicon-based phase 20, unmasking the second region(s) 23, placing a second mask on top of the silicon-based phase 20, forming a layer of the secondary phase 22, removing the second mask, and repeating to a desired thickness. The mask and second masks may be sized slightly different for each layer to form the desired interface geometry.

Thus, the secondary phase 22 can be described as having an inner surface area adjacent to the surface 14 of the substrate 12 and an outer surface area adjacent to the environmental barrier coating, with the outer surface area being greater than the inner surface area. For example, the outer surface area may be at least twice the inner surface area in certain embodiments.

As stated, the secondary phase 22 is based on a second composition. In embodiments, the second composition may include mullite, a metal silicide, Si₃N₄, SiC, SiAlON, , HfSiO₄, ZrSiO₄, an oxide/non-oxide composite, a silicate glass composition (e.g., containing Si, C, Ni, and O), or a combination thereof.

Depending on the chemical composition of the secondary phase, a TGO layer may or may not be present on a surface 27 of the secondary phase 22 adjacent to the EBC 18. When including mostly a non-oxidized second composition (e.g., a metal silicide, Si₃N₄, SiC, SiAlON, or a silicate glass composition), then an TGO layer may form on the surface 27 of the secondary phase 22. Alternatively, when including mostly a pre-oxidized second composition (e.g., mullite, HfSiO₄, ZrSiO₄, or an oxide/non-oxide composite), then a TGO layer may not form of the surface 27 of the secondary phase 22. Any TGO layer present is to be considered part of the secondary phase 22 for the purposes of this disclosure.

In one embodiment, the second composition of the secondary phase 22 includes mullite. Mullite has a relatively slow diffusion rate for oxygen at all temperatures of interest, even up to 1650 °C (e.g., 1200 °C to 1650 °C). At temperatures over 1200 °C, it is believed that the only other crystalline oxide that has lower oxygen diffusion rate than mullite is alumina, which has a very high expansion coefficient compared to the substrate 12 and cannot be deposited as dense coatings without spallation. Although mullite has a coefficient of thermal expansion ("CTE") that is similar to that of SiC-based CMC substrate and that of silicon (of the silicon-based phase 20), the CTE of mullite is not an exact match to SiC or Si. This slight mismatch of CTE could lead to problems related to thermal expansion, such as cracking and/or delamination, if the bondcoat 16 is too thick. For example, it is believed that a bondcoat 16 having a thickness 508 µm would lead to problems related to the CTE mismatch after repeated exposure to the operating temperatures. On the other hand, it is believed that a bondcoat 16 having a maximum thickness of 381 µm or less, such as 25.4 µm to 381 µm, is better suited to survive such operating temperatures without significant problems from the CTE mismatch. In one particular embodiment, the bondcoat 16 has a maximum thickness of 254 µm, such as 75 µm to 254 µm. In particular embodiments, the multiple phases of the bondcoat 16 have substantially the same thickness. For example, the silicon-based phase may a first thickness and the secondary phase may have a second thickness, with the first thickness being within 5% of the second thickness.

As stated above, the bondcoat 16 may be used in conjunction with an EBC 18 to form a coated component 10 with an increased operating temperature compared to that using only a silicon bondcoat. As used herein, environmental barrier coating or "EBC" refers to a coating comprising one or more layers of ceramic materials, each of which provides specific or multi-functional protections to the underlying CMC. EBCs generally include a plurality of layers, such as rare earth silicate coatings (e.g., rare earth disilicates such as slurry or APS-deposited yttrium ytterbium disilicate (YbYDS)), zirconium silicate, hafnium silicate, alkaline earth aluminosilicates (e.g., comprising barium-strontium-aluminum silicate (BSAS), such as having a range of compositions of BaO, SrO, Al₂O₃, SiO₂, or combinations thereof), hermetic layers (e.g., a rare earth disilicate), outer coatings (e.g., comprising a rare earth monosilicate, such as slurry or APS-deposited yttrium monosilicate (YMS)), or combinations thereof. One or more layers may be doped as desired, and the EBC 18 may also be coated with an abradable coating.

The EBC 18 may include any combination of one or more layers formed from materials selected from EBC 18 or thermal barrier coating ("TBC") layer chemistries, including but not limited to rare earth silicates (e.g., mono-silicates and di-silicates), aluminosilicates (e.g., mullite, barium strontium aluminosilicate (BSAS), rare earth aluminosilicates, etc.), zirconium silicate, hafnium silicate, hafnia, zirconia, stabilized hafnia, stabilized zirconia, rare earth hafnates, rare earth zirconates, rare earth gallium oxide, etc. The EBC 18 may include a hafnia layer, an alumina layer, or both. Alternatively or additionally, the EBC 18 may include a rare earth disilicate layer, a rare earth monosilicate layer, or both. The EBC 18 may be formed from a plurality of individual layers 28. In the embodiments shown, EBC 18 may include any combination of a hermetic layer, silicate layer, or any of the layers described above.

The coated component 10 is particularly suitable for use as a component found in high temperature environments, such as those present in gas turbine engines, for example, combustor components, turbine blades, shrouds, nozzles, heat shields, and vanes. In particular, the coated component 10 may be a CMC component positioned within a hot gas flow path of the gas turbine such that the EBC system forms an environmental barrier for the underlying substrate 12 to protect the component within the gas turbine when exposed to the hot gas flow path. In certain embodiments, the bondcoat 16 is configured such that the coated component 10 is exposed to operating temperatures of about 1475° C to about 1650° C, while the bondcoat 16 remains substantially unaffected by these operating temperatures. Thus, the bondcoat 16 may withstand exposure to operating temperatures of about 1475° C to about 1650 °C, particularly in the second region 23 that includes the secondary phase 22.

Methods are also generally provided for forming coated components, such as any of the exemplary coated components described above. Referring to FIG. 3, an exemplary method 30 is shown for forming a coated component having a bondcoat with multiple phases, each phase spanning from a surface of a substrate to an EBC thereon such as described above. At 32, a silicon-based phase is formed on a first portion of a surface of a substrate. At 34, a secondary phase is formed on a second portion of the surface of the substrate, wherein the silicon-based phase and the secondary phase form a bondcoat on the surface of the substrate. At 36, an environmental barrier coating is formed on the bondcoat.

Further aspects are provided by the subject matter of the following clauses:
A coated component, comprising: a substrate having a surface; a bondcoat on the surface of the substrate, wherein the bondcoat has a first region comprising a silicon-based composition and a second region comprising a second composition different from the silicon-based composition, wherein the first region and the second region span a thickness of the bondcoat, and wherein the second composition has a temperature capability that is greater than the silicon-based composition; and an environmental barrier coating on the bondcoat.

The coated component as in any preceding clause, wherein the second composition has a temperature capability that is 50 °C or greater than the silicon-based composition.

The coated component as in any preceding clause, wherein the second composition has a temperature capability that is 100 °C or greater than the silicon-based composition.

The coated component as in any preceding clause, wherein the second region comprises at least 60% by weight of the second composition.

The coated component as in any preceding clause, wherein the second region has an inner surface area adjacent to the surface of the substrate and an outer surface area adjacent to the environmental barrier coating, and wherein the outer surface area is greater than the inner surface area.

The coated component as in any preceding clause, wherein the outer surface area is at least twice the inner surface area.

The coated component as in any preceding clause, wherein an interface between the first region and the second region is at an angle to the surface of the substrate.

The coated component as in any preceding clause, wherein the second region defines a trapezoidal cross-section.

The coated component as in any preceding clause, wherein an interface between the first region and the second region is stepped.

The coated component as in any preceding clause, wherein an interface between the first region and the second region is curved.

The coated component as in any preceding clause, wherein an interface between the first region and the second region includes at least one geometrical interlock.

The coated component as in any preceding clause, wherein the first region comprises at least 95% by weight silicon.

The coated component as in any preceding clause, wherein the first region consists essentially of silicon.

The coated component as in any preceding clause, further comprising: a thermally grown oxide layer on the first region, wherein the thermally grown oxide layer comprises silica.

The coated component as in any preceding clause, wherein the second composition comprises mullite, a metal silicide, Si₃N₄, SiC, SiAlON, a silicate glass composition, HfSiO₄, ZrSiO₄, an oxide/non-oxide composite, or a combination thereof.

The coated component as in any preceding clause, wherein the second region further comprises 0% to 33.6% by weight silicon.

The coated component as in any preceding clause, wherein the second region further comprises 2% to 40% by weight silicon.

The coated component as in any preceding clause, wherein the second composition is mullite, wherein the second region includes an inner surface area adjacent to the surface of the substrate and an outer surface area adjacent to the environmental barrier coating, and wherein the outer surface area is greater than the inner surface area.

The coated component as in any preceding clause, wherein the substrate comprises a ceramic matrix composite.

The coated component as in any preceding clause, wherein the first region has a first thickness and the second region has a second thickness, wherein the first thickness is within 5% of the second thickness.

The coated component (10) as in any preceding clause, wherein the secondary phase (22) comprises the high temperature material and 0% to 33.6% by weight silicon.

The coated component (10) as in any preceding clause, wherein the second phase comprises the high temperature material and 2% to 40% by weight silicon.

The coated component (10) as in any preceding clause, wherein the secondary phase comprises the high temperature material and 2% to 40% by weight silicon.

A method of forming the coated component of any preceding clause.

A method of forming a coated component, the method comprising: forming a first region comprising a silicon-based composition on a first portion of a surface of a substrate; forming a second region comprising a second composition on a second portion of the surface of the substrate, wherein the second composition is different from the silicon-based composition, wherein the first region and the second region form a bondcoat on the surface of the substrate; and forming an environmental barrier coating on the bondcoat.

The method of any preceding claim, wherein the first region is formed prior to the second region.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A coated component (10), comprising:
a substrate (12) having a surface (14);
a bondcoat (16) on the surface (14) of the substrate (12), wherein the bondcoat (16) comprises a silicon-based phase (20) and a secondary phase (22), wherein the secondary phase (22) comprises at least 60% of a high temperature material; and
an environmental barrier coating (18) on the bondcoat (16),
wherein the silicon-based phase (20) spans a first region of the bondcoat (16) from the surface (14) of the substrate (12) to the environmental barrier coating (18), and wherein the secondary phase (22) spans a second region of the bondcoat (16) from the surface (14) of the substrate (12) to the environmental barrier coating (18).

2. The coated component (10) as in claim 1, wherein the secondary phase (22) has an inner surface area adjacent to the surface (14) of the substrate (12) and an outer surface area adjacent to the environmental barrier coating (18), and wherein the outer surface area is greater than the inner surface area.

3. The coated component (10) as in claim 2, wherein the outer surface area is at least twice the inner surface area.

4. The coated component (10) as in claim 2 or 3, wherein an interface (26) between the silicon-based phase (20) and the secondary phase (22) is at an angle to the surface (14) of the substrate (12).

5. The coated component (10) as in claim 4, wherein the secondary phase (22) defines a trapezoidal cross-section.

6. The coated component (10) as in any preceding claim, wherein the silicon-based phase (20) comprises at least 95% by weight silicon.

7. The coated component (10) as in any preceding claim, wherein the silicon-based phase (20) consists essentially of silicon.

8. The coated component (10) as in any preceding claim, further comprising:
a thermally grown oxide layer (24) on the silicon-based phase (20), wherein the thermally grown oxide layer (24) comprises silica.

9. The coated component (10) as in any preceding claim, wherein the high temperature material comprises mullite, a metal silicide, Si₃N₄, SiC, SiAlON, a silicate glass composition, HfSiO₄, ZrSiO₄, an oxide/non-oxide composite, or a combination thereof.

10. The coated component (10) as in any preceding claim, wherein the high temperature material comprises mullite.

11. The coated component (10) as in any preceding claim, wherein the secondary phase (22) comprises the high temperature material and 0% to 33.6% by weight silicon.

12. The coated component (10) as in any preceding claim, wherein the second phase comprises the high temperature material and 2% to 40% by weight silicon.

13. The coated component (10) as in any preceding claim, wherein the substrate (12) comprises a ceramic composite matrix.

14. The coated component (10) as in any preceding claim, wherein the silicon-based phase (20) has a first thickness and the secondary phase (22) has a second thickness, wherein the first thickness is within 5% of the second thickness.

15. A method of forming a coated component (10), the method comprising:
forming a silicon-based phase (20) comprising silicon on a first portion of a surface (14) of a substrate (12);
forming a secondary phase (22) comprising a high temperature material on a second portion of the surface (14) of the substrate (12), wherein the silicon-based phase (20) and the secondary phase (22) form a bondcoat (16) on the surface (14) of the substrate (12); and
forming an environmental barrier coating (18) on the bondcoat (16),
wherein the silicon-based phase (20) spans a first region of the bondcoat (16) from the surface (14) of the substrate (12) to the environmental barrier coating (18), and
wherein the secondary phase (22) spans a second region of the bondcoat (16) from the surface (14) of the substrate (12) to the environmental barrier coating (18).
